# EUROPÄISCHE PATENTANMELDUNG

(11) **EP 0 801 207 A2**
(43) Veröffentlichungstag der Anmeldung: **15.10.1997**
(21) Anmeldenummer: 97810165.7
(22) Anmeldetag: 19.03.1997
(51) Int. Cl.: E21B 12/00, F16B 13/14

(54) **Werkzeug mit Markierungselement**

(30) Priorität: 09.04.1996 DE 19613999
(71) Anmelder: HILTI Aktiengesellschaft, 9494 Schaan (LI)
(72) Erfinder: Spangenberg, Rolf, 82131 Gauting (DE)
(74) Vertreter: Wildi, Roland

(57) **Zusammenfassung**

Das der Nachbearbeitung einer vorgefertigten Sacklochbohrung (5) dienende Werkzeug weist ein in die Sacklochbohrung (5) einsetzbares Schaftteil (2) und ein sich entgegen der Bearbeitungsrichtung koaxial an das Schaftteil (2) anschliessendes Einsteckende (1) auf. Am Schaftteil (2) ist drehschlüssig ein radial abstehendes, in Bearbeitungsrichtung weisendes Markierungselement (15) angeordnet.

## Beschreibung

Die Erfindung betrifft ein Werkzeug für die Nachbearbeitung einer vorgefertigten Sacklochbohrung mit einem in die Sacklochbohrung einführbaren Schaftteil und einem sich entgegen der Bearbeitungsrichtung koaxial an das Schaftteil anschliessenden Einsteckende.

Aus der Sicht der Funktion, die Bohrungen zu erfüllen haben, ist häufig eine Nachbearbeitung erforderlich. Bei einer solchen Nachbearbeitung kann es sich beispielsweise um eine Reinigung, Aufrauhung, Glättung oder Hinterschneidung der Bohrung handeln.

Insbesondere mittels diamantbestückter Hohlbohrkronen hergestellte Sacklochbohrungen in denen Anker mittels Klebemasse festgelegt werden, ist es notwendig, dass eine Nachbearbeitung der Sacklochbohrung erfolgt, indem diese aufgerauht oder hinterschnitten wird. Ein Werkzeug zur Herstellung solcher Hinterschneidungen ist beispielsweise aus der EP 0 289 988 bekannt.

Dieses bekannte Werkzeug weist ein Schaftteil mit mehreren, das Schaftteil radial überragenden, entlang dessen Längserstreckung in einer Reihe hintereinander angeordneten Schneidkörpern auf. Entgegen der Bearbeitungsrichtung schliesst sich an das Schaftteil ein mit einem Bohrgerät in Verbindung bringbares, gegenüber dem Schaftteil koaxial angeordnetes Einsteckende an.

Bei einer Nachkontrolle der Bohrungen kann von aussen nicht festgestellt werden, ob eine für die Funktion der Bohrung notwendige Nachbearbeitung stattgefunden hat.

Der Erfindung liegt die Aufgabe zugrunde ein Werkzeug zu schaffen, mit welchem einfach und zuverlässig angezeigt wird, ob eine Nachbearbeitung einer vorgefertigten Bohrung stattgefunden hat, die aufgrund der gestellten Anforderungen notwendig ist.

Erfindungsgemäss wird die Aufgabe dadurch gelöst, dass am Schaftteil drehschlüssig ein radial abstehendes, in Bearbeitungsrichtung weisendes Markierungselement angeordnet ist.

Die erfindungsgemässe, am Schaftteil drehschlüssige, radial abstehende Anordnung eines in Bearbeitungsrichtung weisenden Markierungselementes ermöglicht die Erzeugung einer kreisförmigen Markierung an der Oberfläche des Untergrundes.

Damit das Markierungselement einerseits nicht zu tief in die Oberfläche des Untergrundes eindringt, andererseits jedoch eine Markierung an der Oberfläche des Untergrundes anbringt, ist beispielsweise der Abstand zwischen einer bearbeitungsseitigen Stimfläche des Schaftteiles und einem bearbeitungsseitigen Ende des Markierungselementes etwas kleiner als die Tiefe der Sacklochbohrung. Besteht beispielsweise die Nachbearbeitung in der Erzeugung von Hinterschneidungen, so kann sich das Schaftteil am Grund der Sacklochbohrung abstützen und das Markierungselement dringt nur wenig in die Obefläche des Untergrundes ein.

Die an der Oberfläche der Untergrundes erzeugte Markierung ist ein Zeichen dafür, dass eine Nachbearbeitung der vorgefertigten Sacklochbohrung stattgefunden hat.

Damit ein einziges, der Nachbearbeitung dienendes Werkzeug für Sacklochbohrungen unterschiedlicher Tiefe verwendet werden kann, ist zweckmässigerweise das Markierungselement entgegen der Bearbeitungsrichtung über eine Feder am Schaftteil abgestützt.

Vor der Nachbearbeitung wird das Schaftteil dieses erfindungsgemässen Werkzeuges in die Sacklochbohrung eingesetzt, bis dieses an dem Grund der Sacklochbohrung ansteht. Beim Einsetzen des Schaftteiles kommt es zu einer Versetzung des Schaftteiles gegenüber dem Markierungselement, sobald dieses mit der Obefläche des Untergrundes in Berührung kommt. Dabei wird die zwischen dem Markierungselement und dem Schaftteil wirkende Feder zusammengedrückt und vorgespannt. Die Vorspannkraft der Feder bewirkt ein Andrücken des Markierungselementes gegen die Oberfläche des Untergrundes, so dass das Markierungselement bei der anschliessenden Nachbearbeitung in die Oberfläche des Untergrundes gedrückt wird und somit eine Markierung erzeugt.

Damit das Markierungselement in einem grösseren radialen Abstand von dem Schaftteil angeordnet werden kann, ist das Markierungselement vorteilhafterweise an einem das Schaftteil umgebenden Trägerring angeordnet.

Aus Gründen der einfacheren und wirtschaftlicheren Herstellung des Werkzeuges ist vorzugsweise das Markierungselement gegen die Kraft der Feder gegenüber dem Trägerring verschiebbar.

Da das Markierungselement einem Verschleiss unterliegt, ist eine Auswechselmöglichkeit von Vorteil. Ein schnelles Auswechseln wird beispielsweise erreicht, wenn der gesamte Trägerring, an dem das Markierungselement angeordnet ist, komplett ausgetauscht wird. Damit dies möglich ist, ist zweckmässigerweise der Trägerring lösbar mit dem Schaftteil verbindbar.

Eine einfache Markierung auf der Oberfläche des Untergrundes wird vorzugsweise mit einem Markierungselement geschaffen, das wenigstens eine im wesentlichen kegelförmige Markierungsspitze aufweist. An diese Markierungsspitze schliesst sich beispielsweise ein gestufter, zylindrischer Bereich an, der in einer entsprechend ausgebildeten, gestuften Aufnahmebohrung des Trägerringes aufgenommen und axial versetzbar geführt wird.

Bei der Nachbearbeitung einer Sacklochbohrung in einem harten Untergrund wie beispielsweise Beton, Gestein oder dergleichen, ist zweckmässigerweise wenigstens die Markierungsspitze aus Hartmetall gebildet.

Die Erfindung wird anhand einer Zeichnung die ein Ausführungsbeispiel zeigt, näher erläutert.

Das dargestellte Werkzeug dient der Herstellung von Hinterschneidungen 7 in einer vorgefertigten Sacklochbohrung 5. Das Werkzeug weist ein in die Sacklochbohrung 5 einsetzbares zylindrisches Schaftteil 2 und ein sich entgegen der Bearbeitungsrichtung koaxial an das Schaftteil 2 anschliessendes Einsteckende 1 auf.

Im bearbeitungsseitigen Bereich des Schaftteiles 2 sind mehrere, parallel zur Längserstreckung des Schaftteiles 2 hintereinander in einer Reihe angeordnete Schneidkörper 4 angeordnet. Diese Schneidkörper 4 weisen Schneidspitzen auf.

Das Einsteckende 1 ist mit einem nicht dargestellten Bohrgerät in Verbindung bringbar. Der axialen Verriegelung und drehfesten Verbindung des Werkzeugs gegenüber dem Bohrgerät dient eine beidseitig axial geschlossene Längsnut 3 im Bereich des Einsteckendes 1.

Der Durchmesser der Sacklochbohrung 5 entspricht im wesentlichen dem Durchmesser des Schaftteiles 2 und dem Betrag, um den die Schneidkörper 4 das Schaftteil 2 radial überragen.

In einem dem Einsteckende 1 naheliegenden Endbereich des Schaffteiles 2 ist ein Trägerring 8 axial- und drehfest angeordnet. Der Trägerring 8 besitzt eine Durchgangsbohrung 9, deren Durchmesser im wesentlichen dem Durchmesser des Schaftteiles 2 entspricht. Mittels eines Klemmelementes 10 in Form einer Klemmschraube ist der Trägerring 8 axial- und drehfest mit dem Schaftteil 2 verbunden.

In einem das Schaftteil 2 umgebenden Bereich weist der Trägerring 8 eine gestuft ausgebildete Aufnahmebohrung 11 auf, die sich in Bearbeitungsrichtung verjüngt. Die Aufnahmebohrung 11 setzt sich aus drei Abschnitten mit unterschiedlichen Innendurchmessem zusammen. Ein erster, bearbeitungsseitiger Abschnitt weist den kleinsten Innendurchmesser auf.

Dieser erste Abschnitt dient der axialen Führung eines zylindrischen, den Trägerring 8 in Bearbeitungsrichtung überragenden Bereiches eines Markierungselementes 15. Der sich entgegen der Bearbeitungsrichtung an den ersten Abschnitt anschliessende zweite Abschnitt weist einen Durchmesser auf, der grösser ist als der Innendurchmesser des ersten Abschnittes.

Dieser zweite Abschnitt dient der Führung eines einstückig mit dem zylindrischen Bereich des Markierungselementes 15 verbundenen Bundes, dessen Durchmesser im wesentlichen dem Innendurchmesser des zweiten Abschnittes entspricht. Der zweite Abschnitt dient ebenfalls der Aufnahme einer Feder 14, die zusammengedrückt wird, wenn das Markierungselement 15 gegenüber dem Trägerring 8 entgegen der Bearbeitungsrichtung versetzt wird. Die Feder 14 gewährleistet den Kontakt des Markierungselementes 15 mit der Oberfläche O des Untergrundes U bei unterschiedlich tiefen Sacklochbohrungen 5.

Der sich entgegen der Bearbeitungsrichtung an den zweiten Abschnitt anschliessende dritte Abschnitt weist ein Innengewinde 12 auf, das mit einem Verschlusselement 13 mit Aussengewinde zusammenwirkt. Der Flankendurchmesser des Innengewindes 12 ist grösser als der Innendurchmesser des zweiten Abschnittes.

Das in dem Trägerring 8 angeordnete, axial versetzbare Markierungselement 15 wird von einer im wesentlichen kegelförmigen Markierungsspitze 16 gebildet. Diese Markierungsspitze 16 dient der Herstellung von Markierungen an der Oberfläche O des Untergrundes U im Mündungsbereich der Sacklochbohrung 5.

Beim Erzeugen der Hinterschneidungen 7 wird das erfindungsgemässe Werkzeug in die vorgefertigte Sacklochbohrung 5 eingesetzt, bis das bearbeitungsseitige Ende des Schaftteiles 2 am Bohrlochgrund der vorgefertigten Sacklochbohrung 5 zur Anlage gelangt. Gleichzeitig gelangt das federbelastete Markierungselement 15 mit der Oberfläche O des Untergrundes U in Berührung. Dabei wird die im Trägerring 8 angeordnete Feder 14 in Abhängigkeit der Tiefe der Sacklochbohrung 5 zusammengedrückt. Anschliessend erfolgt die Inbetriebnahme eines nicht dargestellten Bohrgerätes, das mit dem Einsteckende 1 des Werkzeuges verbunden ist. Durch die einseitige Anordnung der Schneidkörper 4 an dem Schaftteil 2 entsteht eine exzentrische Drehbewegung des Werkzeuges, so dass die Schneidkörper 4 mit einem Teil der Bohrlochwand 6 in Berührung kommen und Hinterschneidungen 7 erzeugen.

Die sich mitdrehende Markierungsspitze 16 erzeugt eine im wesentlichen kreisförmige Rille an der Oberfläche O des Untergrundes U. Diese Rille ist ein Nachweis dafür, dass eine Nachbearbeitung der vorgefertigten Sacklochbohrung 5 durch Herstellung von Hinterschneidungen 7 stattgefunden hat.

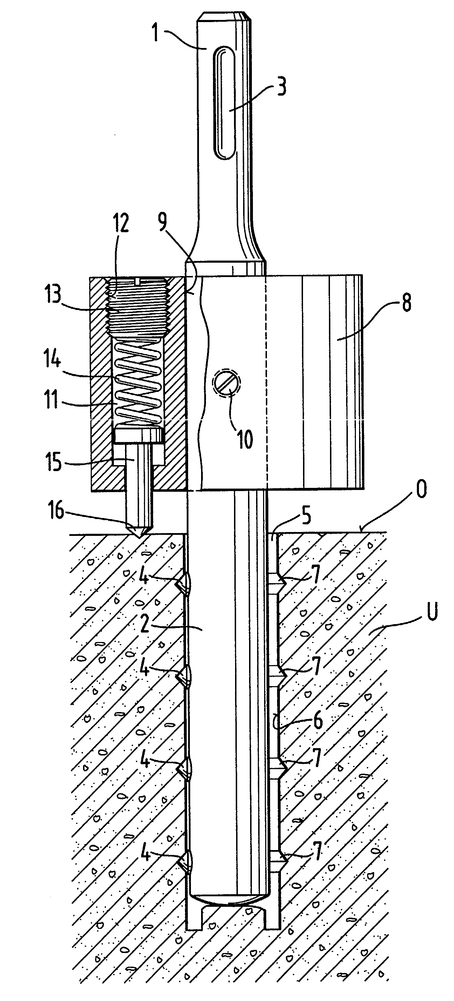

## Patentansprüche

1. Werkzeug für die Nachbearbeitung einer vorgefertigten Sacklochbohrung (5) mit einem in die Sacklochbohrung (5) einführbaren Schaftteil (2) und einem sich entgegen der Bearbeitungsrichtung koaxial an das Schaftteil (2) anschliessenden Einsteckende (1), **dadurch gekennzeichnet**, dass am Schaftteil (2) drehschlüssig ein radial abstehendes, in Bearbeitungsrichtung weisendes Markierungselement (15) angeordnet ist.

2. Bohrwerkzeug nach Anspruch 1, dadurch gekennzeichnet, dass das Markierungselement (15) entgegen der Bearbeitungsrichtung über eine Feder (14) am Schaftteil (2) abgestützt ist.

3. Bohrwerkzeug nach Anspruch 1 oder 2, dadurch gekennzeichnet, dass das Markierungselement (15) an einem das Schaftteil (2) umgebenden Trägerring (8) angeordnet ist.

4. Bohrwerkzeug nach Anspruch 3, dadurch gekennzeichnet, dass das Markierungselement (15) gegen die Kraft der Feder (14) gegenüber dem Trägerring (8) verschiebbar ist.

5. Bohrwerkzeug nach Anspruch 3 oder 4, dadurch gekennzeichnet, dass der Trägerring (8) lösbar mit dem Schaftteil (2) verbindbar ist.

6. Bohrwerkzeug nach einem der Ansprüche 1 bis 5, dadurch gekennzeichnet, dass das Markierungselement (15) wenigstens eine im wesentlichen kegelförmige Markierungsspitze (16) aufweist.

7. Bohrwerkzeug nach Anspruch 6, dadurch gekennzeichnet, dass wenigstens die Markierungsspitze (16) aus Hartmetall gebildet ist.
